# DEMANDE DE BREVET EUROPEEN

(11) **EP 1 180 330 A1**
(43) Date de publication de la demande: **20.02.2002**
(21) Numéro de dépôt: 00117581.9
(22) Date de dépôt: 16.08.2000
(51) Int. Cl.: A23G 9/02

(54) **Confiserie glacée et procédé de fabrication**

(71) Demandeur: SOCIETE DES PRODUITS NESTLE S.A., 1800 Vevey (CH)
(72) Inventeur: Schlegel, Myriam, 60000 Fouquenies (FR); Wuersch, Pierre, 1814 La Tour-de-Peilz (CH)
(74) Mandataire: Archambault, Jean

(57) **Abrégé**

Confiserie glacée conservant son onctuosité et présentant une croissance cristalline réduite lors d'un choc thermique suivi d'une recongélation comprenant de la matière grasse, un agent sucrant, des solides non gras du lait et de l'eau, caractérisé en ce que la somme des quantités d'amidon et de solides non gras du lait est comprise entre 2,5 et 18 % en poids et que le rapport en poids amidon/solides non gras du lait est compris entre 0,03 et 1,5. Procédé de fabrication d'une telle confiserie glacée.

## Description

La présente invention se rapporte au domaine des confiseries glacées et en particulier les crèmes glacées.

Les crèmes glacées sont traditionnellement fabriquées par la mise en oeuvre d'ingrédients tels que : matière grasse, solides non gras du lait, agents sucrants, émulsifiants et eau. Les différents ingrédients sont homogénéisés, le mélange est ensuite pasteurisé, refroidi, éventuellement maturé aux environs de 2 à 4°C et surgelé sous agitation avec injection d'air pour assurer un foisonnement de l'ordre de 75 à 120 %.

De manière générale, l'amidon de par ses caractéristiques physico-chimiques et ses propriétés rhéologiques est souvent utilisé en industrie alimentaire comme épaississant et/ou comme liant. Ainsi de nombreux documents décrivent-ils l'utilisation d'amidon natif ou gélatinisé, modifié ou non physiquement ou chimiquement, dans les confiseries glacées, ceci à des fins de substitut de matière grasse ou de texturant.

Les confiseries glacées sont particulièrement appréciées pour leurs caractéristiques crémeuses et onctueuses. Cependant, ces produits, pour conserver leurs caractéristiques organoleptiques optimales d'onctuosité doivent être stockés et manipulés avec précaution. Ainsi, des variations de températures, même faibles, peuvent s'observer lors du stockage, de la distribution ou de la manutention. Ceci est particulièrement la cas lorsque le consommateur achète une confiserie glacée, qu'il ne la consomme par sur le moment, et qu'il s'écoule du temps entre le moment où le produit est sorti du rayon surgelé et celui où il est mis dans un congélateur ménager. Dans de telles circonstances, on assiste à une décongélation sensible et partielle du produit avant sa recongélation. De tels cycles de fluctuation de température sont responsables d'une croissance cristalline des cristaux de glace au sein du produit. Il en résulte ainsi une texture cristallisée. Cette texture et cette sensation en bouche cristallisée doublée d'une apparence altérée du produit compromet ou pour le moins diminue sa qualité globale telle que perçue par le consommateur.

Différentes gommes et/ou émulsifiants ont été utilisés comme additifs dans le but d'améliorer la stabilité, le crémeux et la résistance des confiseries glacées aux chocs thermiques. Il peut s'agir de gomme de guar, de farine de graine de guar ou de caroube, d'alginate, de carboxymethylcellulose, de xanthane, de carrageenan, d'émulsifiants de synthèse ou naturels tels que du jaune d'oeuf. Les protéines laitières contenues dans l'extrait sec laitier participent à cette stabilisation grâce à leur propriétés de liaison de l'eau.

Cependant l'utilisation de gommes présente l'inconvénient de conférer au produit une texture parfois ferme ou gommeuse. D'autre part l'ajout de tels composés stabilisants est souvent mal perçu par le consommateur et leur utilisation réglementée. De plus, les additifs de type solides non gras laitiers et/ou protéines ou dérivés de protéines laitières sont particulièrement onéreux.

Le problème que se propose de résoudre l'invention consiste à fournir une formulation peu onéreuse pour confiseries glacées permettant d'augmenter leur stabilité lors de chocs thermiques sans compromettre leurs qualités organoleptiques.

A cette fin la présente invention consiste en une confiserie glacée, notamment une crème glacée, comprenant de la matière grasse, des agents sucrants, des solides non gras du lait, de l'eau et de l'amidon caractérisée en ce que la somme des quantités d'amidon et de solides non gras du lait est comprise entre 2,5 et 18 % et que le rapport en poids amidon/solides non gras du lait est compris entre 0,03 et 1,5.

Une confiserie glacée selon la présente invention peut comprendre 2 à 12 % de matière grasse, 10 à 25 % d'agents sucrants, 2 à 15 % de solides non gras du lait, 0,5 à 3 % d'amidon et 45 à 85 % d'eau.

Les pourcentages indiqués dans la description concernent des pourcentages en poids sauf en ce qui concerne les valeurs de foisonnement qui sont definies en % en volume.

Ainsi, selon l'invention, le remplacement partiel des solides non gras du lait traditionnellement mis en oeuvre par de l'amidon permet une économie non négligeable tout en améliorant la résistance aux chocs thermiques. De plus, le produit ainsi obtenu présente une texture et une sensation en bouche crémeuse et onctueuse proche, voire supérieure, à celle du produit traditionnel. Ainsi, au-delà du simple avantage économique, l'invention permet d'améliorer simultanément l'agrément d'usage ainsi que les caractéristiques texturales et organoleptiques de confiseries glacées.

L'amidon mis en oeuvre dans la présente invention peut être un amidon natif ou un amidon modifié chimiquement ou physiquement. Il peut ainsi s'agir d'amidons natifs de maïs ou de riz, de pomme de terre ou de tapioca, par exemple, utilisés seuls ou en mélange ou encore de ces mêmes origines d'amidons modifiés chimiquement, tels que des amidons hydroxypropylés, par exemple. De tels amidons présentent une température de gélatinisation comprise entre 50 et 85°C, environ, ainsi qu'un diamètre des granules compris entre 3 et 100 µm, environ.

Les ingrédients mis en oeuvre pour la fabrication d'une confiserie glacée selon l'invention sont, outre l'amidon, des solides non gras du lait tels que du lait écrémé en poudre ou concentré, par exemple. Il peut aussi s'agir de lactosérum doux dégraissé, en poudre ou concentré, par exemple. Ces solides non gras du lait peuvent aussi provenir d'un mélange commercial de poudre de lait et de protéines du lactosérum dont la fonctionnalité est contrôlée par des traitements spécifiques de dénaturation. Il peut s'agir par exemple de Nollibel® .

Les compositions glacées selon l'invention peuvent comprendre, de manière optionnelle, un ou des émulsifiants à hauteur de 0,2 à 0,3 % facilitant l'émulsification des différents ingrédients lors de la fabrication. Il peut ainsi s'agir, par exemple, de mono ou de diglycérides ou de polysorbates ou un mélange de ceux-ci, par exemple.

Les confiseries glacées selon la présente invention peuvent comprendre des agents stabilisants, il peut s'agir de farine de caroube, de farine de Guar, d'alginates, de carboxymethyl cellulose, de xanthane, de carrageenan utilisés seuls ou en mélange à un dosage de 0,1 à 0,5 %, préférentiellement de 0,25 %.

La matière grasse utilisée peut être une matière grasse végétale ou animale, hydrogénée ou non, par exemple. Il peut s'agir d'un mélange de matière grasse d'origine végétale telles que de l'huile de palme, de coco ou de palmiste hydrogénées ou non.

L'agent sucrant employé peut être du saccharose, du glucose, du fructose ou du sirop de glucose de DE variable variant de 20 à 40, ou un mélange de ceux-ci, par exemple. La formulation du produit selon l'invention, peut en outre comprendre des colorants tel que du beta-carotène, par exemple et/ou toute sorte d'arômes ou parfums usuellement utilisés pour aromatiser les confiseries glacées, tels que vanille ou chocolat par exemple.

Des confiseries glacées selon l'invention peuvent être composées de solides non gras du lait, d'agents sucrants, de matière grasse et d'eau. Les proportions des ingrédients que sont l'amidon et les solides non gras du lait permettent d'obtenir une stabilité accrue des produits ainsi qu'une baisse substantielle du coût de revient de ces produits. Cette économie est réalisée via le remplacement partiel des solides non gras du lait mis en oeuvre traditionnellement par l'amidon. De plus, les qualités organoleptiques des compositions glacées selon l'invention ne sont pas diminuées par rapport aux produits traditionnels. Ainsi, les caractéristiques d'onctuosité et de crémeux sont accrues et surtout mieux conservées pendant la période de stockage. Dans les compositions glacées selon l'invention c'est l'addition d'amidon en lieu et place d'une partie des solides non gras du lait qui permet de ralentir la vitesse de fonte des produits obtenus et confère ainsi au produit une plus grande stabilité aux chocs thermiques.

Les compositions glacées selon l'invention peuvent présenter un extrait sec de l'ordre de 25 à 45 %, de préférence 30 à 40 % et de préférence encore de 33 à 36 %. Les compositions selon l'invention peuvent en outre comprendre, de manière optionnelle, des annexes telles que des fruits ou morceaux de fruits, par exemple ou des noix ou noisettes, entières ou en morceau, par exemple.

La présente invention concerne aussi un procédé de fabrication de confiserie glacées comprenant les étapes suivantes :
- dispersion, chauffage et homogénéisation des ingrédients entrant dans la composition d'une confiserie glacée selon la présente invention à une température, une pression et pendant un temps suffisant pour hydrater et gélatiniser l'amidon et pasteuriser le mélange,
- refroidissement du mélange jusqu'à une température comprise entre 2 et 8°C,
- maturation du mélange à une température comprise entre 2 et 6°C, sans agitation,
- congélation à une température comprise entre -3°C et -7°C, en assurant un foisonnement compris entre 70 et 130%,
- durcissement du mélange par surgélation à une température comprise entre - 20°C et -40°C.

De manière optionnelle, l'étape de maturation du mélange peut être effectuée sous agitation.

Les ingrédients entrant dans la composition d'une confiserie glacée selon la présente invention peuvent être dispersés aux alentours de 60 à 70°C environ pendant 15 à 30 minutes environ, par exemple. L'ensemble peut être chauffé et homogénéisé aux alentours de 70 à 75°C, par exemple, à une pression de l'ordre de 140 à 220 bars, par exemple. Ces étapes de dispersion, chauffage et homogénéisation permettent d'assurer l'hydratation et le gonflement de l'amidon.

Le mélange peut ensuite être pasteurisé selon les méthodes connues de l'homme du métier, par exemple aux alentours de 80 à 90°C pendant 10 à 30 secondes. L'étape d'homogénéisation-chauffage peut être réalisée à une température pasteurisatrice assurant par la même la pasteurisation du mélange. Le mélange peut ensuite être refroidi aux alentours de 2 à 8°C par des moyens connus. Ce mélange peut ensuite être maturé ou non pendant 4 à 48 heures aux alentours de 2 à 6°C, par exemple, avec ou sans agitation. Après cette étape de maturation, le mélange peut être congelé aux alentours de -3 à -7°C sous agitation avec injection de gaz de manière à opérer un foisonnement de l'ordre de 70 à 130 %, par exemple. Le mélange obtenu peut être ensuite durci par congélation aux alentours de -20 à -40°C, par exemple.

Après l'étape de maturation, les compositions glacées peuvent, par exemple, être extrudées sous forme de quenelles, plus ou moins foisonnées, à l'aide d'un extrudeur réfrigéré de l'industrie des crèmes glacées, avec ou sans injection de gaz, par exemple.

De manière à évaluer l'influence du remplacement partiel des solides non gras du lait par de l'amidon, différents tests texturaux, microscopiques et macroscopiques peuvent être réalisés.

### Mesure de la fonte de crèmes glacées :

Les tests de fontes sont réalisés tant sur des échantillons conservés à -30°C que sur des échantillons ayant subi un choc thermique.

Choc thermique standardisé : Les échantillons initialement conservés à -30°C sont soumis pendant 7 jours à un cycle de température -10°C/20°C. Au bout des 7 jours, on évalue les paramètres de fonte de ces échantillons ayant subi un choc thermique.

La température du test de fonte est fixée 20°C, dans un enceinte saturée en humidité. Avant le test, les échantillons sont tempérés une nuit à -20°C. Chaque échantillon de crème glacée est démoulé et déposé sur une grille au-dessus d'une balance. La durée du test est comprise entre 30 et 240 minutes environ. On enregistre ainsi au cours du temps, la masse de produit non fondu. Les paramètres mesurés sont les suivants :
M : pourcentage en poids de produit écoulé à travers la grille à la fin du test.
S : temps mis pour que 1 % de la masse initiale soit écoulée.

### Mesure de la viscosité des mélanges pour confiserie glacée :

La mesure de viscosité est pratiquée sur le mélange lors de l'étape de maturation aux alentours de 4°C, par exemple. Une sonde de mesure est plongée dans le mélange et est reliée à un moteur qui assure sa rotation à une vitesse constante prédéfinie.

La viscosité peut ainsi être mesurée aux alentours de 4°C à l'aide d'un viscosimètre Brookfield LVT-DV2, par exemple. La vitesse de rotation de la sonde peut être établie à 30 tours par minute, par exemple. La viscosité peut alors être lue sur l'écran du viscosimètre. Cette viscosité peut être exprimée en Pa.s ou un multiple.

### Taille et répartition des cristaux de glace dans une crème glacée.

Une aliquote de crème glacée est mélangée avec une quantité équivalente de glycérol et observée au microscope à une température de -10°C. La mesure peut être réalisée dans une enceinte à -10°C équipée d'un microscope et d'une caméra. On peut ainsi mesurer le diamètre moyen des cristaux (en µm) dans les produits finis ainsi que dans les produits ayant subi un choc thermique. Connaissant le diamètre moyen des cristaux on peut aisément évaluer la croissance cristalline ayant lieu au sein du produit.

Des modes de réalisation de l'invention incluent par exemple, les barres glacées, les crèmes glacées, les yogourts glacés ainsi que toute confiserie ou dessert glacé plus ou moins foisonnés.

On a ainsi pu constater que les échantillons contenant par exemple 1,5 % d'amidon et 6 % de solides non gras du lait présentent une viscosité homogène par rapport à un échantillon témoin contenant traditionnellement 10 % de solides non gras du lait et pas d'amidon. Ainsi, le mélange après l'étape de maturation ne présente pas de séparation de phase, reste pompable et ne montre pas de signes de développement de structure gélifiée.

En ce qui concerne le propriétés de résistance aux chocs thermiques, les paramètres mesurés mettent en évidence un retard en ce qui concerne la vitesse de fonte des échantillons contenant de l'amidon ceci par rapport au produit traditionnel.

Les confiseries glacées selon la présente invention montrent une stabilité améliorée et des caractéristiques organoleptiques similaires aux produits traditionnels. De tels produits selon l'invention conservent leurs propriétés organoleptiques de crémeux et d'onctuosité tout au long de leur conservation, stockage, manutention, distribution et plus spécialement vis à vis de chocs thermiques néfastes à ces caractéristiques. Ces produits présentent en effet une croissance cristalline réduite par rapport à des produits traditionnels. Ceci contribue à leur consistance onctueuse et à la conservation de cette caractéristique malgré des conditions de stockage défavorables responsables du développement de cristaux de glaces qui peuvent être responsable d'une structure cristallisée et sableuse. De telles fonctionnalités permettent d'envisager une production, un stockage ainsi qu'une distribution des produits selon l'invention sur une échelle de temps, de volume et d'espace.

Une confiserie glacée selon la présente invention se carcatérise donc par le fait qu'elle conserve son onctuosité et présente une croissance cristalline réduite lors d'un choc thermique suivi d'une recongélation.

On entend par « croissance cristalline réduite » une augmentation du diamètre moyen des cristaux de glace inférieure à 50 % après choc thermique (voir Tableau 4).

L'invention est décrite ci-dessous en référence à divers exemples précis de modes préférés de réalisation et de formulation. Cependant, diverses adaptations et/ou modifications peuvent être réalisées tout en restant dans le domaine de la présente invention.

### FABRICATION DES DIFFERENTS ECHANTILLONS

Différents exemples de fabrication de confiserie glacées selon l'invention sont réalisés selon les formulations indiquées dans le tableau 1 ci-dessous.

Les différents ingrédients sont dispersés à 65°C puis suit une étape d'hydratation à 60°C pendant 20 minutes. Le mélange est préchauffé à 72°C, ce qui assure la gélatinisation de l'amidon présent, le cas échéant. Le mélange est ensuite homogénéisé à 180 bars à l'aide d'un homogénéisateur de l'industrie des crèmes glacées puis pasteurisé à 86°C pendant 20 secondes. Après refroidissement à 5°C, le mélange est maturé pendant 24 heures à 4°C, sans agitation. Enfin, le mélange est congelé aux environ de -5°C avec un foisonnement de 100 %. La crème glacée obtenue est durcie à -30°C par des moyens conventionnels.

**Tableau 1**

| | exemple 1 | exemple 2 | exemple 3 | exemple 4 | exemple 5 |
|---|---|---|---|---|---|
| Nollibel ® | 10 | 6 | 6 | 6 | 0 |
| Poudre de lait écrémé | 0 | 0 | 0 | 0 | 10 |
| Amidon de pomme de terre hydroxypropylé | 0 | 1.5 | 0 | 0 | 0 |
| Amidon de tapioca hydroxypropylé | 0 | 0 | 0 | 1.5 | 0 |
| Amidon de maïs natif | 0 | 0 | 1.5 | 0 | 0 |
| Cremodan ® | 0.5 | 0.5 | 0.5 | 0.5 | 0.5 |
| Graisse végétale Polawar® | 8 | 8 | 8 | 8 | 8 |
| Sugar | 14 | 15 | 15 | 15 | 14 |
| Sirop de glucose DE 38-42 | 4 | 5 | 5 | 5 | 4 |
| Eau | 63.5 | 64.5 | 64.5 | 64.5 | 63.5 |
| Nollibel® : mélange de poudre de lait et de protéines sériques fonctionnelles. | | | | | |
| Cremodan® : mélange d'émulsifiants et de stabilisants. | | | | | |
| Polawar® : mélange de matière grasse végétale fractionnée et partiellement hydrogénée de palmiste. | | | | | |

### Evolution de la viscosité des mélanges

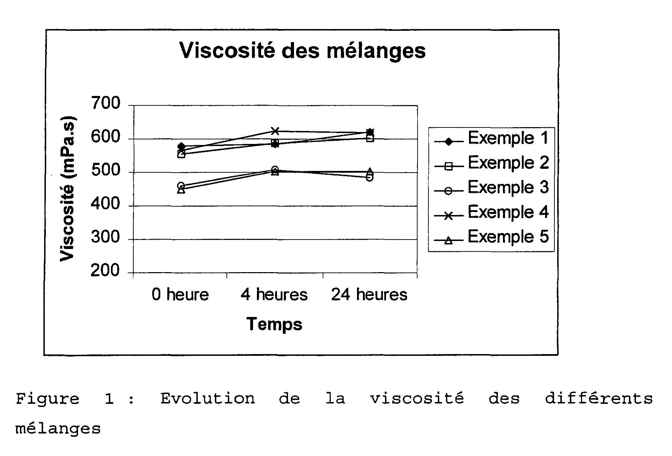

La figure 1 montre les viscosités des mélanges et l'évolution de ces viscosités au cours de l'étape de maturation à 4°C.

Tous les mélanges sont homogènes après 24 heures de maturation, c'est à dire que l'on n'observe pas de séparation de phase malgré la non-agitation. Les mélanges restent pompables et ne sont pas gélifiés. On peut noter une faible augmentation de la viscosité sur la période de temps mesurée. De plus les gammes de viscosité sont assez étroites et s'inscrivent dans les valeurs des exemples de référence (exemples 1 et 5).

### Tests de fonte :

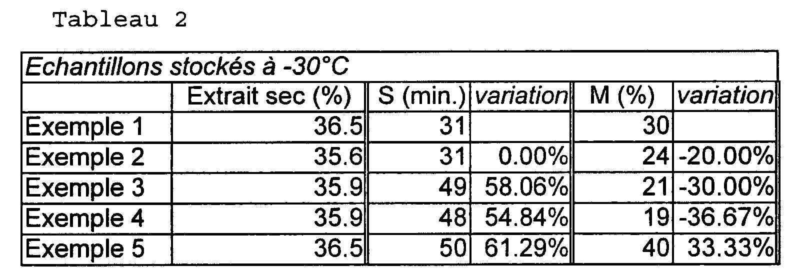

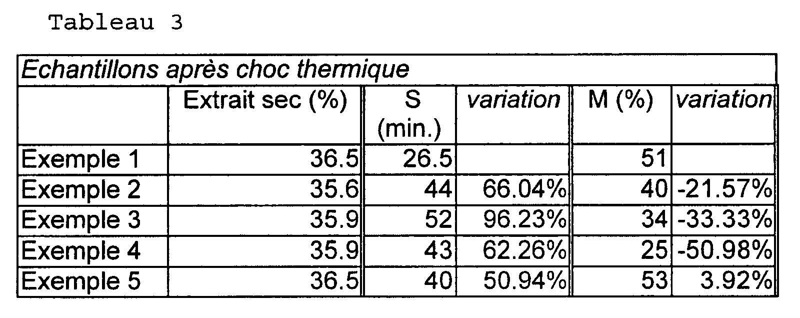

Les tableaux 2 et 3 montrent que tous les échantillons contenant de l'amidon commencent à fondre plus tard (valeur S toujours supérieure, jusqu'à 100 % d'augmentation, voire égale) et leur pourcentage de produit fondu à la fin du test est toujours inférieur aux références. Ces conclusions sont valables pour les produits conservés à -30°C mais aussi, ce qui est plus important pour les produits ayant subi un choc thermique.

### Taille des cristaux et croissance cristalline :

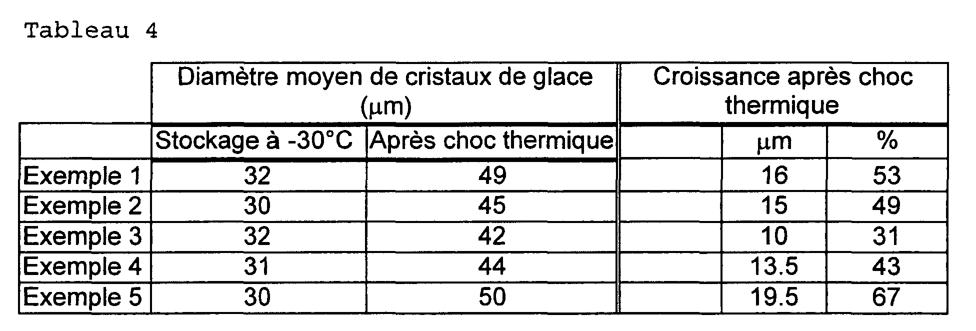

Le tableau 4 montre le diamètre moyen des cristaux de glace au sein des différents produits glacés. On peut remarquer que les produits contenant de l'amidon présentent d'une part un diamètre moyen des cristaux plus faible que les références et ceci particulièrement après choc thermique. Les échantillons avec amidon présentent des augmentations de taille des cristaux significativement inférieures aux références. L'analyse de la taille et de la répartition des cristaux de glace permet de montrer que le remplacement partiel des solides non gras du lait par de l'amidon améliore la stabilité des échantillons au cours du choc thermique.

### Analyse sensorielle :

Les cinq échantillons ont été évalués par un panel de personnes entraînées à l'évaluation de texture et d'arôme.

Le questionnaire distribué contient les attributs descriptifs pour :
- texture
- goût sucré
- arôme

Tous les descripteurs de texture montrent des effets produits significatifs, traduisant des différences entre les produits. Les produits n'apparaissent pas significativement différents pour les descripteurs d'arôme. De plus de manière surprenante les échantillons avec amidon présentent un score supérieur en ce qui concerne le descripteur relatif à l'arôme crème.

Les échantillons avec amidon (comparé aux échantillons témoins) sont plus présents en bouche, un peu plus durs, plus lisses, fondent moins vite, sont moins froids et un peu plus gommeux ; ce qui semble correspondre à la présence de cristaux dans les échantillons témoin. Il est ainsi confirmé que ces échantillons avec amidon supporteraient donc mieux le choc thermique.

## Revendications

1. Confiserie glacée comprenant de la matière grasse, un agent sucrant, des solides non gras du lait, de l'eau et de l'amidon, **caractérisé en ce que** la somme des quantités d'amidon et de solides non gras du lait est comprise entre 2,5 et 18 % en poids et que le rapport en poids amidon/solides non gras du lait est compris entre 0,03 et 1,5.

2. Confiserie glacée comprenant en poids 2 à 12 % de matière grasse, 10 à 25 % d'agents sucrants, 2 à 15 % de solides non gras du lait, 0,5 à 3 % d'amidon et 45 à 85 % d'eau.

3. Confiserie glacée selon les revendications 1 et 2 **caractérisée en ce que** l'amidon est choisi dans le groupe formé des amidons natifs de pomme de terre, de maïs, de tapioca ou de riz ou un mélange de ceux-ci.

4. Confiserie glacée selon les revendications 1 à 3 **caractérisée en ce que** l'amidon est un amidon modifié chimiquement ou physiquement.

5. Confiserie glacée selon les revendications 1 et 2 comprenant un ou des émulsifiants.

6. Confiserie glacée selon les revendications 1 et 2 comprenant au moins un agent stabilisant choisi dans le groupe suivant : farine de graine de caroube ou de guar, alginates, cellulose, xanthane, carraghenannes.

7. Confiserie glacée selon les revendications 1 et 2 **caractérisée en ce que** les solides non gras du lait sont choisis dans le groupe composé du lait écrémé en poudre ou concentré, du lactosérum doux dégraissé, en poudre ou concentré, d'un mélange commercial de poudre de lait et de protéines du lactosérum.

8. Confiserie glacée selon les revendications 1 et 2 **caractérisée en ce que** les agents sucrants sont choisis dans le groupe comprenant le saccharose, le glucose, le fructose ou des sirops de glucose ou un mélanges de ces agents.

9. Confiserie glacée selon la revendication 8 **caractérisée en ce que** les sirops de glucose présentent un DE compris entre 20 et 40.

10. Confiserie glacée **caractérisée en ce qu'**elle conserve son onctuosité et présente une croissance cristalline réduite lors d'un choc thermique suivi d'une recongélation.

11. Procédé de fabrication de confiserie glacée comprenant les étapes suivantes :
- dispersion, chauffage et homogénéisation des ingrédients entrant dans la composition d'une confiserie glacée selon l'une des revendications 1 à 9 à une température, une pression et pendant un temps suffisant pour hydrater et gélatiniser l'amidon et pasteuriser le mélange,
- refroidissement du mélange jusqu'à une température comprise entre 2 et 8°C,
- maturation du mélange à une température comprise entre 2 et 6°C, sans agitation,
- congélation à une température comprise entre -3°C et -7°C, en assurant un foisonnement compris entre 70 et 130%,
- durcissement du mélange par surgélation à une température comprise entre - 20°C et -40°C.

12. Procédé selon la revendication 11 **caractérisé en ce que** l'étape de maturation du mélange est effectuée sous agitation.
